# EUROPEAN PATENT APPLICATION

(11) **EP 3 422 326 A1**
(43) Date of publication of application: **02.01.2019**
(21) Application number: 17789541.4
(22) Date of filing: 25.04.2017
(51) Int. Cl.: G09B 29/00, G01C 21/26, G06T 11/60

(54) **MAP DISPLAY SYSTEM AND MAP DISPLAY PROGRAM**

(30) Priority: 26.04.2016 JP 2016087918
(71) Applicant: Aisin Aw Co., Ltd., Anjo-shi, Aichi 444-1192 (JP)
(72) Inventor: HIRAMOTO, Naoyuki, Anjo-shi Aichi 444-1192 (JP); ISHIHARA, Yoshihiro, Anjo-shi Aichi 444-1192 (JP)
(74) Representative: Cabinet Beau de Loménie
(86) International application number: PCT/JP2017/016393
(87) International publication number: WO 2017/188259

(57) **Abstract**

There are provided a map display system and a map display program that can arrange characters along a road so as to improve appearance and readability. A map display system arranges a plurality of characters along a road in a direction of the road which is a reference direction, and is configured to determine a spacing between consecutive characters according to directions of the consecutive characters, so as to suppress overlapping of the consecutive characters, the consecutive characters being two characters consecutively arranged in the direction of the road.

## Description

### TECHNICAL FIELD

The present invention relates to a map display system and a map display program.

### BACKGROUND ART

There is known a technique for displaying a road name along a road (see Patent Literature 1). In Patent Literature 1, a linear road portion of a road serves as a portion where a road name is displayed.

### CITATION LIST

### PATENT LITERATURE

Patent Literature 1: JP 2008-102002 A

### SUMMARY OF INVENTION

### TECHNICAL PROBLEMS

However, there may be no linear road portion, and thus, there has been a case in which a road name needs to be displayed along a curved road portion. In such a case, the directions of characters forming a road name vary, causing a problem that the appearance and readability of the road name become poor. Namely, the spacing between consecutive characters may be perceived to be tight or wide depending on the directions of the characters, resulting in poor appearance and readability.

The present invention is made in view of the above-described problem, and provides a technique capable of arranging characters along a road so as to improve appearance and readability.

### SOLUTIONS TO PROBLEMS

To provide the above-described technique, a map display system of the present invention is a map display system that arranges a plurality of characters along a road in a direction of the road, the direction of the road being a reference direction, in which the map display system determines a spacing between consecutive characters according to directions of the consecutive characters, so as to suppress overlapping of the consecutive characters, the consecutive characters being two characters consecutively arranged in the direction of the road.

To provide the above-described technique, a map display program of the present invention is a map display program causing a computer to function as a map display system that arranges a plurality of characters along a road in a direction of the road, the direction of the road being a reference direction, in which the map display system determines a spacing between consecutive characters according to directions of the consecutive characters, so as to suppress overlapping of the consecutive characters, the consecutive characters being two characters consecutively arranged in the direction of the road.

In the above-described configuration, consecutive characters look or do not look almost overlapping, depending on the directions in which the consecutive characters are arranged. Hence, by determining the spacing between consecutive characters according to the directions in which the consecutive characters are arranged, the perception that the consecutive characters almost overlap each other can be suppressed. Accordingly, characters can be arranged along a road so as to improve appearance and readability.

### BRIEF DESCRIPTION OF DRAWINGS

FIG. 1 is a block diagram of a navigation system.
FIGS. 2A to 2C are examples of a map.
FIGS. 3A to 3C are diagrams showing arrangement of characters.

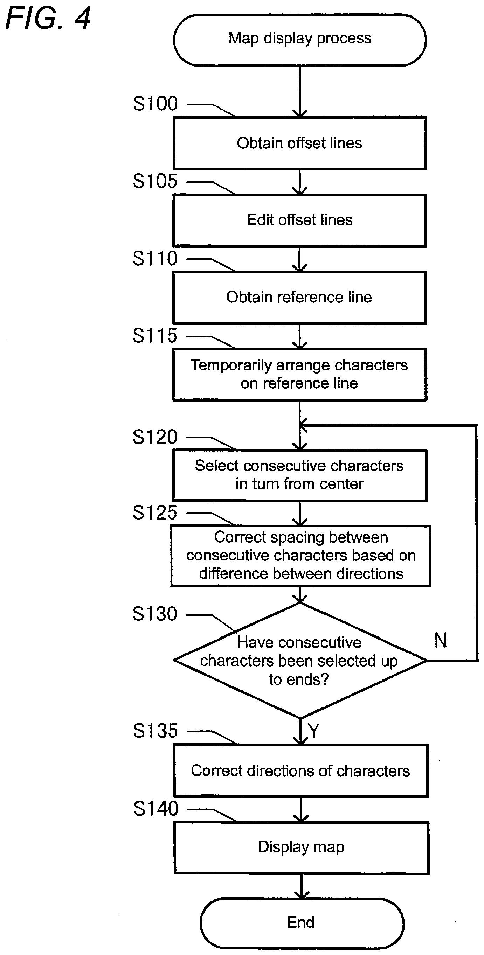

FIG. 4 is a flowchart of a map display process.
FIG. 5 is a diagram showing arrangement of characters.

### DESCRIPTION OF EMBODIMENTS

Here, an embodiment of the present invention will be described in the following order:
(1) Configuration of a navigation system;
(2) Map display process; and
(3) Other embodiments.

### (1) Configuration of a navigation system:

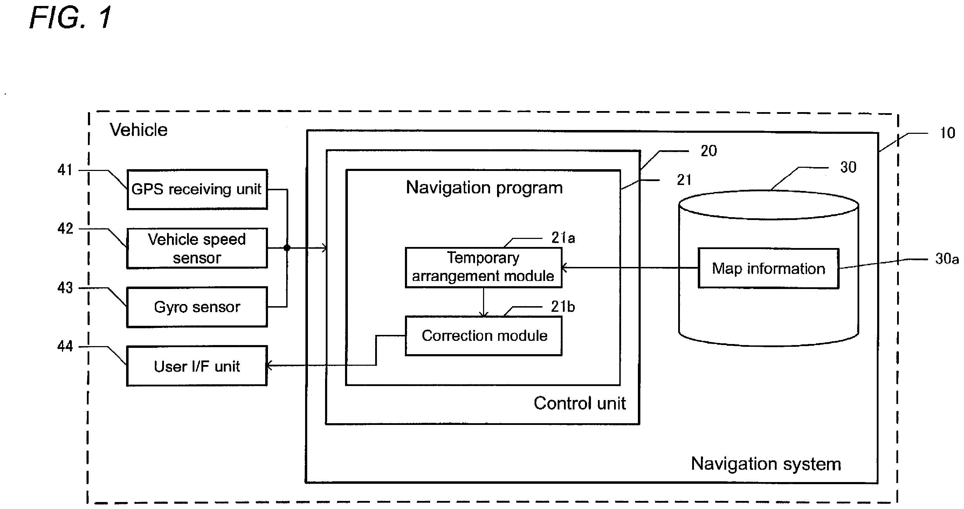

FIG. 1 is a block diagram showing a configuration of a navigation system 10 serving as a map display system according to one embodiment of the present invention. The navigation system 10 is provided in a vehicle. The navigation system 10 includes a control unit 20 and a recording medium 30. The control unit 20 includes a CPU, a RAM, a ROM, etc., and executes a navigation program 21 stored in the recording medium 30 or the ROM.

The recording medium 30 has map information 30a recorded therein. The map information 30a includes, for example, link data that identifies a link that connects two nodes, and node data representing the locations of the nodes, etc. The link corresponds to a road section in which the vehicle can travel, and the nodes correspond to intersections which are the end points in a length direction of the link. The node data includes information about the intersections corresponding to the nodes. The link data includes shape interpolation point data representing the location of a shape interpolation point set in the center in a width direction of the link. The link data includes information indicating a route name of a route formed by the link. A plurality of consecutive links form a single route, and the route name is recorded so as to be associated with the links.

The vehicle includes a GPS receiving unit 41, a vehicle speed sensor 42, a gyro sensor 43, and a user I/F unit 44. The GPS receiving unit 41 receives radio waves from GPS satellites, and outputs a signal for calculating a current vehicle location through an interface which is not shown. The vehicle speed sensor 42 outputs a signal corresponding to the rotational speed of wheels provided on the vehicle. The control unit 20 obtains a vehicle speed based on the signal from the vehicle speed sensor 42. The gyro sensor 43 detects angular acceleration for a turn in a horizontal plane of the vehicle, and outputs a signal corresponding to vehicle's orientation. The control unit 20 obtains a vehicle's traveling direction based on the signal from the gyro sensor 43. The control unit 20 obtains a current vehicle location by identifying a vehicle's traveling path based on the output signals from the vehicle speed sensor 42, the gyro sensor 43, and the like. The output signal from the GPS receiving unit 41 is used, for example, to correct the current vehicle location identified by the vehicle speed sensor 42, the gyro sensor 43, etc.

The user I/F unit 44 is an interface unit for providing various types of information to a user or accepting, as input, user's instructions. In the present embodiment, the user I/F unit 44 includes a touch panel display and a speaker that outputs audio, which are not shown. The touch panel display is a display unit of the present invention and displays a map. The control unit 20 outputs control signals to the user I/F unit 44 to display an arbitrary image and output arbitrary audio from the speaker. In addition, the control unit 20 obtains user settings based on touch operations on the touch panel display.

The navigation program 21 corresponds to a map display program of the present invention. The navigation program 21 includes a temporary arrangement module 21a and a correction module 21b. The temporary arrangement module 21a and the correction module 21b are program modules that cause the control unit 20 serving as a computer to function as a temporarily arranging unit and a correcting unit, respectively. By the functions of the temporary arrangement module 21a and the correction module 21b, the control unit 20 determines a spacing between consecutive characters according to the directions of the consecutive characters, so as to suppress overlapping of the consecutive characters, the consecutive characters being two characters consecutively arranged in a direction of a road. Details of the temporary arrangement module 21 a and the correction module 21b will be described below.

By the function of the temporary arrangement module 21a, the control unit 20 obtains directions of a plurality of characters for when the plurality of characters are temporarily arranged along a road in a direction of the road which is a reference direction. Namely, by the function of the temporary arrangement module 21a, the control unit 20 renders a map to be displayed on the touch panel display, based on the map information 30a and obtains the location and shape of a road included in the map. The location and shape of the road are the location and shape of a polyline that connects nodes and shape interpolation points which are indicated by the map information 30a.

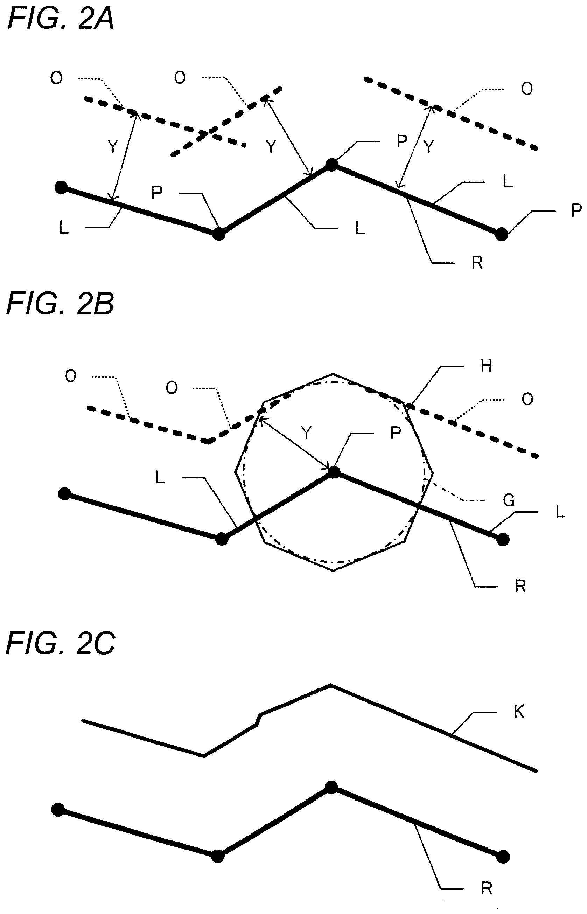

FIG. 2A shows an example of a map. In FIG. 2A, a road line R representing the location and shape of a road is formed on the map. The road line R includes a plurality of line segments L (solid lines) connecting road points P (filled circles) which are points obtained by plotting nodes or shape interpolation points on the map. The line segments L are lines that connect the road points P consecutively present on the road and that pass through the center in a width direction of the road. By the function of the temporary arrangement module 21a, the control unit 20 obtains the road line R based on the node data and shape interpolation point data included in the map information 30a.

By the function of the temporary arrangement module 21a, the control unit 20 obtains offset lines O (dashed lines) which are lines obtained by parallelly moving each of the respective line segments L forming the road line R a certain offset distance Y in a direction perpendicular to the line segments L. The offset distance Y may be set based on the size of characters representing a route name of the road, or may be set to the magnitude of a length that is one-half or more (a factor of 0.5 to 1.0, etc.) of the length in a longitudinal direction of the characters.

Then, by the function of the temporary arrangement module 21a, the control unit 20 connects the offset lines O. FIG. 2B shows a state in which the offset lines O are connected. When two offset lines O intersect each other like the first and second offset lines O from the left in FIGS. 2A and 2B, by the function of the temporary arrangement module 21a, the control unit 20 cuts off the offset lines O at a point of intersection and discards cut-off end portions. The end portions are portions whose distances to any of the line segments L are less than the offset distance Y.

When two offset lines O do not intersect each other like the first and second offset lines O from the right in FIGS. 2A and 2B, by the function of the temporary arrangement module 21a, the control unit 20 obtains a connecting graphic H that connects the two offset lines O. By the function of the temporary arrangement module 21a, the control unit 20 obtains a connecting circle G (dash-dotted line) that passes through two end points, the distance between which is smallest among end points of the two unconnected offset lines O, and that has the offset distance Y as its radius. The center of the connecting circle G is a road point P present at a point of intersection of line segments L from which the two offset lines O connected by the connecting circle G are offset.

Then, by the function of the temporary arrangement module 21a, the control unit 20 obtains, as the connecting graphic H, a regular octagon that circumscribes the connecting circle G. The connecting graphic H may be any graphic as long as directions of outer lines (sides) can be calculated, and is not limited to a regular octagon. By the function of the temporary arrangement module 21a, the control unit 20 obtains the connecting graphic H that is rotated such that one side of the connecting graphic H is parallel to (overlaps) one of the two connected offset lines O.

By the function of the temporary arrangement module 21a, the control unit 20 cuts off the two connected offset lines O and the connecting graphic H at the points of intersection thereof, and discards a portion of the offset lines O inside the connecting graphic H and one of two cut-off portions of the connecting graphic H closer to the road line R. Then, as shown in FIG. 2C, by the function of the temporary arrangement module 21a, the control unit 20 combines together a part of the offset lines O and a part of the connecting graphic H that remain without being discarded, and thereby obtains a reference line K. The reference line K is a continuous line along the road line R.

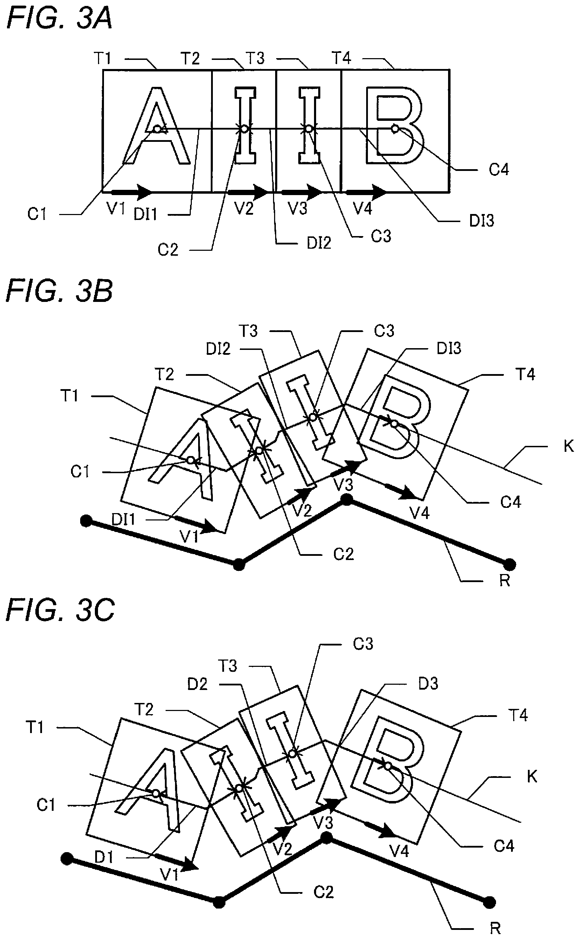

By the function of the temporary arrangement module 21a, the control unit 20 obtains a route name of a road corresponding to the road line R from link data included in the map information 30a, and obtains text images of respective characters forming the route name from font data which is not shown. FIG. 3A is a diagram showing text images T1 to T4 of a plurality of characters "AIIB" forming a route name. The text images T1 to T4 are rectangular images. The length in a longitudinal direction of the text images T1 to T4 is common between the characters, and the length in a transverse direction of the text images T1 to T4 can vary between the characters. The centers of mass of the text images T1 to T4 are defined as a central point C1, and the directions of bases of the text images T1 to T4 are defined as directions V1 to V4 of the characters represented by the text images T1 to T4. By the function of the temporary arrangement module 21a, the control unit 20 sets the central point C1 and the directions V1 to V4 on the map, and thereby temporarily arranges the characters. Note that portions of the text images T1 to T4 other than the characters are transparent images, and the outlines of the text images T1 to T4 are also actually transparent.

As shown in FIG. 3B, by the function of the temporary arrangement module 21a, the control unit 20 temporarily arranges central points C1 to C4 of the text images T1 to T4 on the reference line K to allow the directions of portions of the reference line K at the central points C1 to C4 to coincide with the directions V1 to V4 of the respective characters. That is, the control unit 20 obtains the directions of portions of the reference line K at the central points C1 to C4 on the reference line K, as the directions V1 to V4 of the respective characters. Spacings (distances on the reference line K) between the text images T1 to T4 which are consecutively and temporarily arranged in a direction along the road line R are initial spacings DI1 to DI3. As shown in FIG. 3A, the initial spacings DI1 to DI3 are spacings between the consecutive central points C1 to C4 for when the text images T1 to T4 are arranged with no clearance therebetween. That is, the initial spacing DI1 between the central points C1 and C2 is one-half of a total value of the lengths in the transverse direction of the text images T1 and T2, the initial spacing DI2 between the central points C2 and C3 is one-half of a total value of the lengths in the transverse direction of the text images T2 and T3, and the initial spacing DI3 between the central points C3 and C4 is one-half of a total value of the lengths in the transverse direction of the text images T3 and T4, As shown in FIG. 3A, the lengths in the transverse direction of the respective text images T1 to T4 are set such that when the text images T1 to T4 are arranged with no clearance therebetween, the spacings between the characters are perceived to be equal.

Note that the central points C1 to C4 may be temporarily arranged in any position on the reference line K as long as the initial spacings DI1 to DI3 are being secured. For example, the control unit 20 may temporarily arrange the central points C1 to C4 such that the text images T3 and T4 are arranged in a position as far away as possible from road lines R of other roads or other display objects (icons representing facilities, etc.). Specifically, the control unit 20 may temporarily arrange the central points C1 to C4 in a position midway between two other road lines R intersecting the road line R. In addition, the control unit 20 may temporarily arrange the central points C1 to C4 in a position with the highest degree of linearity of the reference line K.

When a difference between the directions of consecutive characters which are two characters consecutively and temporarily arranged in the direction of the road is greater than or equal to a threshold value, by the function of the correction module 21b, the control unit 20 corrects the spacing between the consecutive characters such that the spacing between the consecutive characters is larger than that for when the difference is less than the threshold value. By the function of the correction module 21b, the control unit 20 obtains, as consecutive characters, all combinations of two characters that are arranged in a consecutive sequence in the direction of the road line R. In the example of FIG. 3B, two characters represented by the text images T1 and T2, two characters represented by the text images T2 and T3, and two characters represented by the text images T3 and T4 are consecutive characters. The control unit 20 obtains the directions V1 to V4 of the respective two characters forming consecutive characters, and obtains differences between the directions V1 to V4. In the example of FIG. 3B, the control unit 20 obtains, as differences, the absolute values of an angle formed by the directions V1 and V2 of consecutive characters represented by the text images T1 and T2, an angle formed by the directions V2 and V3 of consecutive characters represented by the text images T2 and T3, and an angle formed by the directions V2 and V3 of consecutive characters represented by the text images T3 and T4.

In addition, by the function of the correction module 21b, the control unit 20 corrects the spacing between consecutive characters such that the spacing between consecutive characters increases as the difference between the directions of the consecutive characters increases. Specifically, by the function of the correction module 21b, the control unit 20 obtains the amount of correction for the spacing between consecutive characters, based on a result of comparison between the difference between the directions of the consecutive characters and a plurality of threshold values.

### [Table 1]

Table 1 is a table showing a relationship between a plurality of threshold values and the amount of correction for the spacing between consecutive characters. In table 1, first to sixth threshold values (10°, 20°, 30°, 40°, 50°, and 60°) are set as the plurality of threshold values. In addition, the amount of correction for when the difference between the directions of consecutive characters is less than or equal to the first threshold value is defined to be 0, the amount of correction for when the difference between the directions of consecutive characters is greater than the first threshold value and less than or equal to the second threshold value is defined to be 1*Q (Q is a natural number), and the amount of correction for when the difference between the directions of consecutive characters is greater than an Nth threshold value (N is an integer of 1 to 6) and less than or equal to an (N+1)th threshold value is defined to be N*Q. Q (e.g., one) refers to a predetermined number of pixels of the touch panel display. A length obtained by multiplying the number of pixels by the length of one pixel is a length for the amount of correction.

By the function of the correction module 21b, the control unit 20 obtains the amounts of correction N*Q for the respective differences between the directions of consecutive characters by referring to table 1, and adds the amounts of correction N*Q to the corresponding initial spacings DI1 to DI3 which are spacings before correction, and thereby obtains corrected spacings D1 to D3. FIG. 3C shows a state in which the positions of the central points C1 to C4 are corrected so as to secure the spacings D1 to D3 which are obtained by adding the amounts of correction N*Q to the corresponding initial spacings DI1 to DI3.

In addition, by the function of the correction module 21b, the control unit 20 determines consecutive characters temporarily arranged in the center in the direction of the road to be the first consecutive characters whose corresponding one of the spacings D1 to D3 is to be corrected, and shifts the consecutive characters whose corresponding one of the spacings D1 to D3 is to be corrected, one by one outward from the center. When the number of characters is an even number (2M), by the function of the correction module 21b, the control unit 20 first corrects the spacing between consecutive characters including an Mth character and an (M+1)th character in an arrangement sequence in the direction of the road. Note that M is a natural number. In the example of FIGS. 3B and 3C, since M = 2, the spacing D2 between consecutive characters which are two characters represented by the second (= M) text image T2 and the third (= M+1) text image T3 is corrected first.

The control unit 20 may maintain the Mth character in its temporary arrangement position, and move the position of the (M+1)th character by the amount of correction N*Q toward the (M+2)th character side. Alternatively, the control unit 20 may maintain the (M+1)th character in its temporary arrangement position, and move the position of the Mth character by the amount of correction N*Q toward the (M-1)th character side. The control unit 20 may move the position of the (M+1)th character toward the (M+2)th character side and move the position of the Mth character toward the (M-1)th character side such that a total of the amounts of movement of the positions is equal to the amount of correction N*Q.

When the spacing between consecutive characters including the Mth character and the (M+1)th character is adjusted in the above-described manner, the control unit 20 adjusts a corresponding one of the spacings D1 to D3 between consecutive characters including the (M-1)th character and the Mth character and the spacing between consecutive characters including the (M+1)th character and the (M+2)th character. At this time, the control unit 20 moves each of the (M-1)th character and the (M+2)th character by the amount of correction N*Q, instead of moving the Mth character and the (M+1)th character, the correction of which has already been completed. The control unit 20 repeats the process of shifting consecutive characters whose corresponding one of the spacings D1 to D3 is to be corrected, one by one outward until the positions of characters at the ends in the direction of the road are corrected.

On the other hand, when the number of characters is an odd number (2M+1), by the function of the correction module 21b, the control unit 20 first corrects a corresponding one of the spacings D1 to D3 between consecutive characters including an Mth character and an (M+1)th character in an arrangement sequence in the direction of the road, or a corresponding one of the spacings D1 to D3 between consecutive characters including the (M+1)th character and an (M+2)th character. A technique for correcting the spacings D1 to D3 while shifting target consecutive characters one by one outward is the same as that for the case of an even number of characters. Note that the corrected spacings D1 to D3 between characters refer to the spacings between characters that are finally determined by the control unit 20.

In addition, by the function of the correction module 21b, the control unit 20 obtains the directions of portions of the reference line K at the central points C1 to C4 having been moved by the correction, as new directions V1 to V4 of the respective characters. Furthermore, in the present embodiment, by the function of the correction module 21b, the control unit 20 corrects the directions V1 to V4 of the respective characters by allowing the text images T1 to T4 to rotate about the corrected central points C1 to C4. By the function of the correction module 21b, the control unit 20 sets an average direction between the directions of an Sth character (S is a natural number) and an (S+2)th character in an arrangement sequence in the direction of the road, as a corrected direction of an (S+1)th character sandwiched therebetween. Then, the control unit 20 sets an average direction between the directions of the (S+1)th character whose direction correction is completed and an (S+3)th, as a corrected direction of the (S+2)th character sandwiched therebetween. By repeating the above-described process, the directions of the respective characters excluding characters at both ends are corrected, enabling to smoothen the directions of the respective characters.

In the configuration of the present embodiment described above, the control unit 20 suppresses overlapping of consecutive characters by determining the spacings D1 to D4 between consecutive characters according to the directions of the consecutive characters. By thus determining the spacings D1 to D4 between consecutive characters according to the directions in which the consecutive characters are arranged, the perception that consecutive characters almost overlap each other can be suppressed. Therefore, characters can be arranged along the road so as to improve appearance and readability. When the difference between corresponding ones of the directions V1 to V4 of consecutive characters which are two characters consecutively and temporarily arranged in the direction of the road is greater than or equal to the threshold value, the control unit 20 corrects a corresponding one of the spacings D1 to D3 between the consecutive characters such that the spacing between the consecutive characters is larger than that for when the difference is less than the threshold value. By this, a corresponding one of the spacings D1 to D3 between consecutive characters whose directions greatly differ from each other can be increased, enabling to suppress the perception that the corresponding one of the spacings D1 to D3 between the consecutive characters is tight. Therefore, characters can be arranged along the road so as to improve appearance and readability. Although in FIG. 3B the difference between the directions V1 and V2 of "A" and "I" which are consecutive characters is large and thus the spacing between "A" and "I" is perceived to be tight, since, as shown in FIG. 3C, the spacing D1 between "A" and "I" is corrected to be increased, the perception that the spacing between "A" and "I" is tight can be reduced. Likewise, in FIG. 3C, since the spacing D3 between "I" and "B" is corrected to be increased, the perception that the spacing between "I" and "B" is tight can also be reduced.

In addition, the control unit 20 corrects spacings between consecutive characters such that the spacings D1 to D3 between consecutive characters increase as the differences between the directions V1 to V4 of the consecutive characters increase. By thus increasing the spacings D1 to D3 between consecutive characters as the differences between the directions V1 to V4 increase, the perception that the spacings D1 to D3 between the consecutive characters are tight can be effectively suppressed.

The control unit 20 determines consecutive characters temporarily arranged in the center in the direction of the road to be the first consecutive characters whose corresponding one of the spacings D1 to D3 is to be corrected, and shifts the consecutive characters whose corresponding one of the spacings D1 to D3 is to be corrected, one by one outward from the center. By this, upon correcting the spacings D1 to D3 between consecutive characters, the characters can be moved toward both outward sides from the center. The amount of movement of characters can be suppressed over a case of shifting consecutive characters one by one only in one direction from a character at an end, enabling to suppress the amount of movement of a character from a temporary arrangement position.

### (2) Map display process:

Next, a map display process which is performed by the function of the navigation program 21 will be described. The map display process of the present embodiment is a process performed when a map is newly displayed or when there is a change in the location or scale of a map already displayed.

First, by the function of the temporary arrangement module 21a, the control unit 20 obtains offset lines O (step SI00). Namely, as shown in FIG. 2A, the control unit 20 obtains a road line R including a plurality of line segments L that connect road points P obtained by plotting nodes or shape interpolation points on a map, and obtains offset lines O which are lines obtained by parallelly moving each of the plurality of line segments L a certain offset distance Y in a direction perpendicular to the line segments L.

Then, by the function of the temporary arrangement module 21a, the control unit 20 edits the offset lines O (step S105). Namely, as shown in FIGS. 2B and 2C, when two offset lines O intersect each other, the control unit 20 cuts off the offset lines O at a point of intersection and discards cut-off end portions. In addition, when two offset lines O do not intersect each other, the control unit 20 connects the two offset lines O by a connecting graphic H. Then, the control unit 20 cuts off the offset lines O and the connecting graphic H at the points of intersection thereof, and discards a portion of the offset lines O inside the connecting graphic H and one of two cut-off portions of the connecting graphic H closer to the road line R.

Then, by the function of the temporary arrangement module 21a, the control unit 20 obtains a reference line K (step S110). Namely, as shown in FIG. 2C, the control unit 20 combines together a part of the offset lines O and a part of the connecting graphic H that remain without being discarded, and thereby obtains a reference line K.

Then, by the function of the temporary arrangement module 21a, the control unit 20 temporarily arranges characters on the reference line K (step S115). Namely, as shown in FIG. 3B, the control unit 20 temporarily arranges text images T1 to T4 such that the spacings between central points C1 to C4 on the reference line K are initial spacings DI1 to DI3. In addition, the control unit 20 temporarily arranges the text images T1 to T4 in directions such that the directions of bases (directions V1 to V4 of the characters) coincide with the directions of portions of the reference line K at the central points C1 to C4.

Then, by the function of the correction module 21b, the control unit 20 selects consecutive characters in turn from the center (step S120). Namely, when the number of characters is an even number (2M), the control unit 20 first selects a spacing between consecutive characters including an Mth character and an (M+1)th character in an arrangement sequence in the direction of the road, and then repeats selection of two sets of consecutive characters in which only one character in one of the two sets and only one character in the other set have been shifted toward both outward sides. The two sets of consecutive characters in which only one character in one of the two sets and only one character in the other set have been shifted toward both outward sides are consecutive characters in which one character in each set is common to one of the consecutive characters selected first. When the number of characters is an odd number (2M+1), the control unit 20 first selects consecutive characters including an Mth character and an (M+1)th character in an arrangement sequence in the direction of the road, and then repeats selection of two sets of consecutive characters in which only one character in one of the two sets and only one character in the other set have been shifted toward both outward sides.

Then, by the function of the correction module 21b, the control unit 20 corrects spacings D1 to D4 between the consecutive characters based on differences between the directions V1 to V4 (step S125). Namely, the control unit 20 obtains the amounts of correction N*Q for the respective differences between the directions V1 to V4 (absolute values of angles formed) of the consecutive characters by referring to table 1, and adds the amounts of correction N*Q to the corresponding initial spacings DI1 to DI3 which are spacings before correction , and thereby obtains corrected spacings D1 to D3. Then, the control unit 20 moves corresponding ones of the text images T1 to T4 of the selected consecutive characters such that the spacing between corresponding ones of the central points C1 to C4 between the selected consecutive characters is a corresponding one of the corrected spacings D1 to D3. Upon moving the text images T1 to T4, the control unit 20 maintains the position of any of the text images T1 to T4 having been already moved, and moves any of the text images T1 to T4 that has not been moved yet.

Then, by the function of the correction module 21b, the control unit 20 determines whether the consecutive characters have been selected up to the ends (step S130). Namely, the control unit 20 determines whether consecutive characters including characters that are temporarily arranged at the extreme ends in the direction of the road have already been selected as a processing target.

If it is not determined that the consecutive characters have been selected up to the ends (step S130: N), the control unit 20 returns to step S120 and selects, as a processing target, next consecutive characters in which only one character in one of two sets and only one character in the other set have been shifted toward both outward sides. On the other hand, if it is determined that the consecutive characters have been selected up to the ends (step S130: Y), the control unit 20 by the function of the correction module 21b, the control unit 20 corrects the directions V1 to V4 of the respective characters (excluding characters at both ends). Namely, the control unit 20 sets an average direction between the directions of an Sth character and an (S+2)th character in an arrangement sequence in the direction of the road, as a corrected direction of an (S+1)th character sandwiched therebetween.

When the correction of the directions V1 to V4 of the respective characters is completed, by the function of the correction module 21b, the control unit 20 displays a map (step S140). Namely, the control unit 20 renders a map including the road line R and the text images T1 to T4, and displays the map on the touch panel display. By this, a route name represented by the text images T1 to T4 can be displayed along the road line R.

### (3) Other embodiments:

Although, in the above-described embodiment, the first consecutive characters whose spacing is to be corrected are consecutive characters temporarily arranged in the center in the direction of the road, the first consecutive characters whose corresponding one of the spacings D1 to D4 is to be corrected may be consecutive characters temporarily arranged at an end in the direction of the road. In addition, the control unit 20 does not need to correct the spacings D1 to D4 between consecutive characters such that the spacings D1 to D4 between consecutive characters increase as the differences between the directions V1 to V4 of the consecutive characters increase, and only one threshold value may be provided for the differences between the directions V1 to V4. In addition, the initial spacings DI1 to DI3 may be any spacing as long as the spacings between characters are perceived to be equal, and may be equal spacings. In addition, although FIG. 3B is shown for description, characters do not need to be temporarily arranged in the manner shown in FIG. 3B in practice, and by the function of the correction module 21b, the control unit 20 performs at least a process of obtaining the directions V1 to V4 of characters for a case of temporary arrangement.

In addition, although, in the above-described embodiment, offset lines O are connected by a connecting graphic H, the offset lines O may be connected by simply extending the offset lines O in the directions of the respective offset lines O. In addition, the correction of the directions V1 to V4 of characters in step S140 may be omitted. In addition, a connecting graphic H may also be set for a portion where offset lines O are connected originally, so as to moderate a bending angle of a portion where the offset lines O are connected.

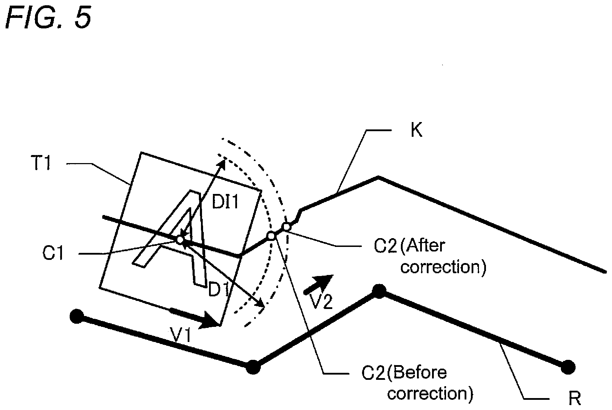

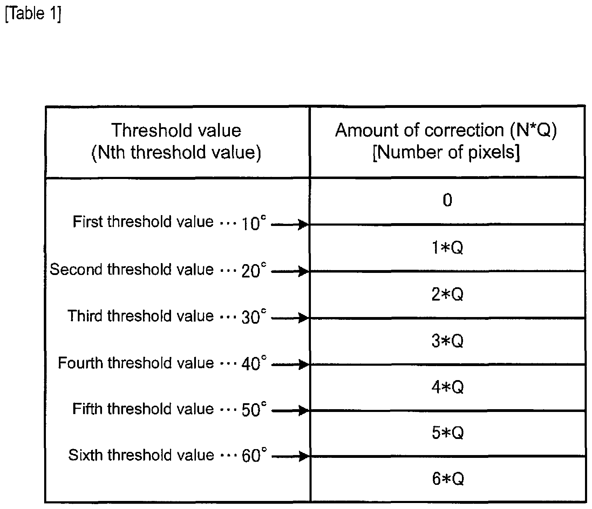

Furthermore, the spacings D1 to D4 between consecutive characters do not necessarily need to be distances on the reference line K, and may be straight-line distances between consecutive characters. FIG. 5 is a diagram showing a state in which a spacing between consecutive characters is a straight-line distance. As shown in FIG. 5, the control unit 20 may obtain a Euclidean distance between central points C1 and C2 on a map, as an initial spacing DI1 or a corrected spacing D1, according to directions V1 and V2 of consecutive characters. As shown in FIG. 5, the central point C2 is present on the points of intersection of circles with the central point C1 at the center and with the initial spacing DI1 and the corrected spacing D1 being a radius (a dashed line and a dash-dotted line) and a reference line K. The control unit 20 can obtain a direction of a portion of the reference line K at one of the points of intersection, as the direction V2 of a character for a case of temporary arrangement.

In the present invention, the expression "characters are temporarily arranged in a direction of a road which is a reference direction" refers to that characters are arranged at a predetermined angle with respect to the direction of the road. For example, the temporarily arranging unit may arrange characters in a direction such that an arrangement direction of the characters is parallel to the direction of the road. For example, when a region assigned to one character is rectangular, the temporarily arranging unit may arrange the character in a direction such that the top and bottom sides or left and right sides of the region are parallel to the direction of the road. By this, a plurality of characters can be temporarily arranged transversely or longitudinally in a direction parallel to the direction of the road. Note, however, that the temporarily arranging unit does not necessarily need to perform the process of actually temporarily arranging characters, and is configured to obtain directions of a plurality of characters for when the plurality of characters are temporarily arranged along a road in a direction of the road which is a reference direction.

The direction of a road is a direction defined to be one in which mobile means such as a vehicle moves on the road, and may be, for example, a direction of a polyline or curve that links or approximates shape interpolation points or nodes which are arranged in the center in a width direction of the road. In addition, a position in which a plurality of characters are temporarily arranged may be a position on the road, or may be a position offset by a certain distance from the road. For example, the position in which a plurality of characters are temporarily arranged may be a position in which the road and the characters do not overlap each other. The plurality of characters may represent any information about the road and may represent, for example, a road name, a destination, control information, etc. In addition, as long as the directions of respective characters can be obtained by temporarily arranging the characters, the characters do not necessarily need to be actually arranged.

Consecutive characters are two characters that are consecutively and temporarily arranged in a direction of a road and that have no other characters therebetween in the direction of the road. A difference between the directions of consecutive characters refers to an angle formed by a direction of the first one of the consecutive characters and a direction of the second one of the consecutive characters. The correcting unit sets a spacing between consecutive characters whose difference in direction is greater than or equal to the threshold value to be larger than a spacing between consecutive characters whose difference in direction is less than the threshold value. For example, the correcting unit may set a spacing between consecutive characters whose difference in direction is greater than or equal to the threshold value to be larger than its temporary arrangement spacing, and maintain a spacing between consecutive characters whose difference in direction is less than the threshold value at its temporary arrangement spacing. Reversely, the correcting unit may maintain a spacing between consecutive characters whose difference in direction is greater than or equal to the threshold value at its temporary arrangement spacing, and set a spacing between consecutive characters whose difference in direction is less than the threshold value to be smaller than its temporary arrangement spacing.

Furthermore, the correcting unit may correct a spacing between consecutive characters such that the spacing between consecutive characters increases as a difference between the directions of the consecutive characters increases. By thus increasing the spacing between consecutive characters as the difference between directions increases, the perception that the spacing between the consecutive characters is tight can be effectively suppressed.

In addition, the correcting unit may determine consecutive characters temporarily arranged in the center in the direction of the road to be the first consecutive characters whose spacing is to be corrected, and shift the consecutive characters whose spacing is to be corrected, one by one outward from the center. By this, upon correcting the spacing between consecutive characters, the characters can be moved toward both outward sides from the center. The amount of movement of characters can be suppressed over a case of shifting consecutive characters one by one only in one direction from a character at an end, enabling to suppress the amount of movement of a character from a temporary arrangement position.

Furthermore, a technique for setting a spacing between consecutive characters according to the directions of the characters as in the present invention is also applicable as a program or a method. In addition, a system, a program, and a method such as those described above may be implemented as a single apparatus, or may be implemented by using parts shared with units included in a vehicle, or may include various modes. For example, it is possible to provide a navigation system including an apparatus such as that described above, and a map display system, method, and program. In addition, changes can be made as appropriate, e.g., a part is software and a part is hardware. Furthermore, the invention also serves as a recording medium for a program that controls an apparatus. Of course, the recording medium for software may be a magnetic recording medium or a magneto-optical recording medium, or even any recording medium to be developed in the future can also be considered exactly in the same manner.

### REFERENCE SIGNS LIST

10: Navigation system, 20: Control unit, 21: Navigation program, 21a: Temporary arrangement module, 21b: Correction module, 30: Recording medium, 30a: Map information, 41: GPS receiving unit, 42: Vehicle speed sensor, 43: Gyro sensor, 44: User I/F unit, C1 to C4: Central point, DI1 to DI3: Initial spacing, G: Connecting circle, H: Connecting graphic, K: Reference line, L: Line segment, O: Offset line, P: Road point, T1 to T4: Text image, V1 to V4: Direction of character, and Y: Offset distance

## Claims

1. A map display system that arranges a plurality of characters along a road in a direction of the road, the direction of the road being a reference direction,
wherein
the map display system determines a spacing between consecutive characters according to directions of the consecutive characters, so as to suppress overlapping of the consecutive characters, the consecutive characters being two characters consecutively arranged in the direction of the road.

2. The map display system according to claim 1, comprising:
a temporarily arranging unit that obtains directions of a plurality of characters for when the plurality of characters are temporarily arranged along the road in the direction of the road, the direction of the road being a reference direction; and
a correcting unit that corrects the spacing between the consecutive characters such that the spacing between the consecutive characters is larger when a difference between the directions of the consecutive characters is greater than or equal to a threshold value than when the difference is less than the threshold value.

3. The map display system according to claim 2, wherein the correcting unit corrects the spacing between the consecutive characters such that the spacing between the consecutive characters increases as the difference increases.

4. The map display system according to claim 2 or 3, wherein the correcting unit determines the consecutive characters temporarily arranged in a center in the direction of the road to be first consecutive characters whose spacing is to be corrected, and shifts the consecutive characters whose spacing is to be corrected, one by one outward from the center.

5. The map display system according to any one of claims 1 to 4, wherein the spacing between the consecutive characters is a straight-line distance between the consecutive characters arranged on a reference line parallel to the road.

6. A map display program causing a computer to function as a map display system that arranges a plurality of characters along a road in a direction of the road, the direction of the road being a reference direction,
wherein
the map display system determines a spacing between consecutive characters according to directions of the consecutive characters, so as to suppress overlapping of the consecutive characters, the consecutive characters being two characters consecutively arranged in the direction of the road.
